# EUROPÄISCHE PATENTSCHRIFT

(11) **EP 3 661 832 B1**
(45) Veröffentlichungstag und Bekanntmachung des Hinweises auf die Patenterteilung: **02.06.2021**
(21) Anmeldenummer: 18732705.1
(22) Anmeldetag: 13.06.2018
(51) Int. Cl.: B62D 5/00, B62D 5/04, B62D 6/00, B62D 7/15

(54) **VERFAHREN ZUM LENKEN EINES FAHRZEUGS**
METHOD FOR STEERING A VEHICLE
PROCEDE SERVANT A DIRIGER UN VEHICULE

(30) Priorität: 02.08.2017 DE 102017213332
(43) Veröffentlichungstag der Anmeldung: 10.06.2020
(73) Patentinhaber: Audi AG, 85045 Ingolstadt (DE)
(72) Erfinder: OBERMÜLLER, Anton, 85055 Ingolstadt (DE); MIHAILESCU, Adrian, 85057 Ingolstadt (DE); ENNING, Martin, 85049 Ingolstadt (DE); LEHMANN, Matthias, 85356 Freising (DE); WIEDENMANN, Christian, 85049 Ingolstadt (DE); ORTLECHNER, Michael, 85057 Ingolstadt (DE); HARTINGER, Ferdinand, 80799 München (DE); DIEPOLD, Klaus, 86156 Augsburg (DE); SCHIFFER, Michael, 85049 Ingolstadt (DE)
(86) Internationale Anmeldenummer: PCT/EP2018/065611
(87) Internationale Veröffentlichungsnummer: WO 2019/025066

(56) Entgegenhaltungen:
- EP-A2- 1 342 642
- WO-A1-2016/167256
- US-A1- 2012 197 496
- US-B1- 6 640 923

## Beschreibung

Die Erfindung betrifft ein Verfahren zum Lenken eines Fahrzeugs und ein Lenksystem zum Lenken eines Fahrzeugs.

Ein Fahrzeug kann ein aktives Lenksystem aufweisen, das bspw. als Überlagerungslenkung bzw. Dynamiklenkung und/oder Hinterachslenkung ausgebildet ist, und ein Lenkgefühl des Fahrers beeinflusst. Ein derartiges Fahrzeug mit einem aktiven Lenksystem weist in der Regel auch eine elektromechanische Lenkung (EPS) auf, die dazu ausgebildet ist, ein Handlenkmoment zu definieren und somit ein Lenkgefühl eines Fahrers des Fahrzeugs zu beeinflussen.

Ein elektrisch betätigtes Servolenksystem ist aus der Druckschrift DE 43 26 992 C2 bekannt.

Die Druckschriften DE 102 01 704 A1 und US 6 640 923 B1 beschreiben ein Steuergerät für eine elektrische Servolenkung.

Ein Verfahren zum Betreiben einer elektrischen Servolenkvorrichtung eines Kraftfahrzeugs ist in der Druckschrift DE 10 2011 051 964 A1 beschrieben. Die Druckschrift US 2012/197496 A1 offenbart ein Verfahren und Lenksystem nach dem Oberbegriff der unabhängigen Ansprüche 1 und 8.

Vor diesem Hintergrund war es eine Aufgabe, einen Einfluss eines aktiven Lenksystems auf ein Lenkrad eines Fahrzeugs zu begrenzen.

Diese Aufgabe wird mit einem Verfahren und einem Lenksystem mit den Merkmalen der unabhängigen Patentansprüche gelöst. Ausgestaltungen des Verfahrens und des Lenksystems gehen aus den abhängigen Patentansprüchen und der Beschreibung hervor.

Das erfindungsgemäße Verfahren ist zum Lenken eines Fahrzeugs vorgesehen, wobei das Fahrzeug eine vordere Achse mit lenkbaren Rädern und eine hintere Achse mit lenkbaren Rädern aufweist, wobei das Lenken mit einem aktiven Lenksystem, das als Komponenten ein von einem Fahrer bedienbares Lenkrad und mindestens ein automatisches aktives Lenkmodul sowie je nach Definition auch die Achsen und die Räder aufweist, umgesetzt wird. Bei dem Verfahren wird von dem Fahrer des Fahrzeugs für das Lenkrad ein manueller primärer Lenkeingriff vorgenommen, wodurch und/oder aufgrund dessen sich für die Räder der vorderen Achse eine manuelle primäre Lenkreaktion ergibt, wobei aufgrund der manuellen primären Lenkreaktion mit dem mindestens einen automatischen Lenkmodul für die Räder mindestens einer Achse, d. h. für die Räder der vorderen und/oder hinteren Achse, mindestens ein automatischer sekundärer Lenkeingriff vorgenommen wird. Außerdem wird eine zu erwartende sekundäre Lenkreaktion des Lenkrads als Effekt auf diesen mindestens einen automatischen sekundären Lenkeingriff berechnet. Aus dieser zu erwartenden sekundären Lenkreaktion wird ein zusätzlicher automatisch einzustellender tertiärer Lenkeingriff für das Lenkrad ermittelt, der von dem mindestens einen automatischen Lenkmodul für das Lenkrad vorgenommen wird.

Durch Vornehmen mindestens eines Lenkeingriffs für mindestens eine der Komponenten des Lenksystems wird bzw. werden für diese mindestens eine Komponente ein Winkel und/oder ein Moment eingestellt, wobei für mindestens eine weitere Komponente des Lenksystems ein Winkel und/oder ein Moment eingestellt wird, der bzw. das sich als Lenkreaktion auf den Lenkeingriff ergibt. Je nach Definition wird zum Vornehmen des Lenkeingriffs für die eine Komponente ein Winkel oder Moment eingestellt, aus der sich für diese eine Komponente ein Moment oder ein Winkel und/oder für die mindestens eine weitere Komponente als Lenkreaktion ein Winkel und/oder Moment ergibt.

In Ausgestaltung wird von dem Fahrer des Fahrzeugs für das Lenkrad der manuelle primäre Lenkeingriff vorgenommen, wobei für das Lenkrad ein primärer manueller Lenkradwinkel als Winkel und/oder ein primäres manuelles Lenkradlenkmoment als Moment eingestellt wird bzw. werden. Daraus ergibt sich für die Räder der vorderen Achse die manuelle primäre Lenkreaktion, wobei für die Räder der vorderen Achse ein primärer manueller Lenkwinkel als Winkel und/oder ein primäres manuelles Lenkmoment als Moment eingestellt wird bzw. werden. Aufgrund der manuellen primären Lenkreaktion wird mit dem mindestens einen automatischen Lenkmodul für die Räder mindestens einer Achse der mindestens eine automatische sekundäre Lenkeingriff vorgenommen, wobei für die Räder ein sekundärer automatischer Lenkwinkel als Winkel und/oder ein sekundäres automatisches Lenkmoment als Moment eingestellt wird bzw. werden. Als zu erwartende sekundäre Lenkreaktion des Lenkrads wird bzw. werden ein sekundärer Lenkradwinkel als Winkel und/oder ein sekundäres Lenkradlenkmoment als Moment berechnet. Aus dieser zu erwartenden sekundären Lenkreaktion wird bzw. werden als der zusätzlich automatisch einzustellende tertiäre Lenkeingriff ein tertiärer Lenkradwinkel als Winkel und/oder ein tertiäres Lenkradlenkmoment als Moment ermittelt, der und/oder das von dem mindestens einen automatischen Lenkmodul für das Lenkrad eingestellt wird bzw. werden.

In Ausgestaltung wird von dem Fahrer des Fahrzeugs für das Lenkrad unter und/oder durch Bereitstellung des manuellen primären Lenkradlenkmoments ein primärer Lenkradwinkel manuell eingestellt, wodurch für die Räder der vorderen Achse als Wirkung des manuellen Lenkradwinkels ein Lenkwinkel als primäre Lenkreaktion manuell eingestellt wird. Außerdem wird mit dem mindestens einen automatischen aktiven Lenkmodul für die Räder mindestens einer Achse, d. h. der vorderen Achse und/oder der hinteren Achse, mindestens ein automatischer Lenkwinkel als sekundäre Lenkreaktion eingestellt. Darauf basierend wird das zu erwartende Lenkradlenkmoment als Effekt bzw. sekundäre Lenkreaktion dieses mindestens einen automatisch eingestellten Lenkwinkels berechnet, wobei aus diesem Effekt das zusätzlich automatisch einzustellende Lenkradlenkmoment als tertiärer Lenkeingriff ermittelt wird, mit dem das Lenkrad beaufschlagt und ein zusätzlicher Lenkradwinkel automatisch eingestellt wird.

Je nach Definition ist der Winkel und/oder das Moment als Betriebsparameter des Lenkeingriffs und/oder der Lenkreaktion ausgebildet und/oder zu bezeichnen.

Das mindestens eine automatische aktive Lenkmodul wirkt zwischen dem Lenkrad und den Rädern der vorderen Achse und ist dazu ausgebildet, das Lenkrad und/oder die Räder der vorderen Achse zu beaufschlagen. Es ist auch möglich, dass das mindestens ein automatische Lenkmodul dazu ausgebildet ist, die Räder der hinteren Achse zu beaufschlagen. Dabei wird von dem mindestens einen automatischen Lenkmodul für die Räder das mindestens eine automatische Moment und/oder der mindestens eine automatischen Winkel eingestellt.

Mit dem zusätzlichen automatisch einzustellenden Lenkradlenkmoment als tertiärer Lenkeingriff wird der mindestens eine automatische sekundäre Lenkeingriff und/oder die daraus resultierende sekundäre Lernreaktion kompensiert. Mit dem zusätzlich automatisch einzustellenden Lenkradlenkmoment wird in Ausgestaltung der Effekt des mindestens einen automatischen Lenkwinkels kompensiert. In der Regel werden die Räder durch den mindestens einen automatisch eingestellten Lenkwinkel zusätzlich zu dem von dem Fahrer manuell eingestellten Lenkwinkel gelenkt, wobei der mindestens eine automatisch eingestellte Lenkwinkel den manuell eingestellten Lenkwinkel überlagert. Eine daraus resultierende Bewegung der Räder um den mindestens einen automatisch eingestellten Lenkwinkel wirkt sich wiederum auf eine Lenksäule, die die vordere Achse mit dem Lenkrad verbindet, sowie auf das Lenkrad aus, woraus sich als Effekt das zu erwartende Lenkradlenkmoment ergibt, das bei dem Verfahren berechnet wird. Das zusätzlich automatisch einzustellende Lenkradlenkmoment, das den Effekt des mindestens einen automatisch eingestellten Lenkwinkels kompensiert, wird berechnet, bevor sich der Effekt auf das Lenkrad auswirkt. Das zusätzlich automatisch einzustellende Lenkradlenkmoment wird für das Lenkrad eingestellt, wenn der Effekt bzw. das zu erwartende Lenkradlenkmoment auf das Lenkrad wirkt.

Der zusätzlich automatisch einzustellende tertiäre Lenkeingriff wird in Abhängigkeit des mindestens einen automatisch eingestellten sekundären Lenkeingriffs und/oder in Abhängigkeit mindestens einer zeitlichen Ableitung, d. h. der ersten oder zweiten Ableitung, des automatisch eingestellten sekundären Lenkeingriffs ermittelt.

In Ausgestaltung wird der tertiäre Lenkeingriff, bspw. das zusätzlich automatisch einzustellende Lenkradlenkmoment, ausschließlich in Abhängigkeit des automatisch einzustellenden sekundären Lenkeingriffs, bspw. des mindestens einen automatisch eingestellten Lenkwinkels, ermittelt.

Das zusätzlich automatisch einzustellende Lenkradlenkmoment zur Kompensation des Effekts wird in Abhängigkeit mindestens einer zeitlichen Ableitung des automatisch eingestellten Lenkwinkels, d. h. in Abhängigkeit einer ersten zeitlichen Ableitung bzw. einer automatisch eingestellten Lenkwinkelgeschwindigkeit des automatisch eingestellten Lenkwinkels und/oder in Abhängigkeit einer zweiten zeitlichen Ableitung bzw. einer automatisch eingestellten Lenkwinkelbeschleunigung des automatisch eingestellten Lenkwinkels ermittelt, bspw. berechnet und/oder eingestellt, wobei eine jeweilige zeitliche Ableitung des automatisch eingestellten Lenkwinkels von diesem abhängig ist.

In Ausgestaltung wird für das mindestens eine Rad der sekundäre Lenkeingriff und zeitgleich für das Lenkrad der zusätzlich automatisch einzustellende tertiäre Lenkeingriff vorgenommen bzw. eingestellt. Dabei ist erfindungsgemäß vorgesehen, dass die sekundäre Lenkreaktion berechnet wird, bevor der sekundäre Lenkeingriff vorgenommen wird, wobei aus dieser zu berechnenden sekundären Lernreaktion der tertiäre Lenkeingriff berechnet wird. Der sekundäre und tertiäre Lenkeingriff werden durch das mindestens eine automatische aktive Lenkmodul gleichzeitig vorgenommen und somit eingestellt.

In Ausgestaltung wird für das mindestens eine Rad der mindestens eine automatische Lenkwinkel und zeitgleich für das Lenkrad das zusätzlich automatisch einzustellende Lenkradlenkmoment eingestellt, das von dem zu erwartenden Lenkradlenkmoment abhängig ist, das als Effekt des mindestens einen automatisch eingestellten Lenkwinkels wiederum von diesem abhängig ist.

Außerdem wird bzw. werden der mindestens eine automatisch eingestellte sekundäre Lenkeingriff, die zu erwartende sekundäre Lenkreaktion als Effekt des mindestens einen automatisch eingestellten sekundären Lenkeingriffs und/oder der zusätzlich automatisch einzustellende tertiäre Lenkeingriff abhängig von mindestens einer Betriebsgröße des Fahrzeugs ermittelt.

In Ausgestaltung wird bzw. werden der mindestens eine automatische Lenkwinkel, das zu erwartende Lenkradlenkmoment als Effekt des mindestens einen automatisch eingestellten Lenkwinkels und/oder das zusätzlich automatisch einzustellende Lenkradlenkmoment abhängig von der mindestens einen Betriebsgröße des Fahrzeugs, bspw. abhängig von einer Gierrate bzw. einem Gierwinkel des Fahrzeugs, dem manuell eingestellten Lenkwinkel, einer manuell eingestellten Lenkwinkelgeschwindigkeit, einer Geschwindigkeit des Fahrzeugs und/oder einer Querbeschleunigung des Fahrzeugs, ermittelt, bspw. berechnet und/oder eingestellt.

Ergänzend ist es möglich, dass der mindestens eine automatische Lenkwinkel, das zu erwartende Lenkradlenkmoment als Effekt des mindestens einen automatisch eingestellten Lenkwinkels und/oder das zusätzlich automatisch einzustellende Lenkradlenkmoment unter Berücksichtigung eines Einspurmodells des Fahrzeugs ermittelt, bspw. berechnet und/oder eingestellt wird bzw. werden.

Das erfindungsgemäße Lenksystem ist zum Lenken eines Fahrzeugs, das eine vordere Achse mit lenkbaren Rädern und eine hintere Achse mit lenkbaren Rädern aufweist, ausgebildet und weist als Komponenten ein von einem Fahrer bedienbares Lenkrad, ein Steuergerät und mindestens ein automatisches Lenkmodul auf. Von dem Fahrer des Fahrzeugs ist für das Lenkrad ein manueller primärer Lenkeingriff vorzunehmen, wodurch sich für die Räder der vorderen Achse eine manuelle primäre Lenkreaktion ergibt. Das mindestens eine automatische Lenkmodul ist aufgrund der manuellen primären Lenkreaktion dazu ausgebildet, für die Räder mindestens einer Achse mindestens einen automatischen sekundären Lenkeingriff vorzunehmen. Das Steuergerät ist dazu ausgebildet, eine zu erwartende sekundäre Lenkreaktion des Lenkrads als Effekt auf diesen mindestens einen automatischen sekundären Lenkeingriff des mindestens einen Lenkmoduls zu berechnen, aus dieser zu erwartenden sekundären Lenkreaktion einen zusätzlichen automatisch einzustellenden tertiären Lenkeingriff zu ermitteln und zu veranlassen, dass das mindestens eine automatische Lenkmodul für das Lenkrad den tertiären Lenkeingriff vornimmt.

Das mindestens eine Lenkmodul ist dazu ausgebildet, die Räder der mindestens einen Achse sowie das Lenkrad zu beaufschlagen.

In der Regel ist mindestens ein Lenkmodul, das auf das Lenkrad und die Räder der vorderen Achse wirkt, dazu ausgebildet, für das Lenkrad den zusätzlich automatisch einzustellenden tertiären Lenkeingriff vorzunehmen. Das mindestens eine Lenkmodul ist dazu ausgebildet, eine Wirkung des Lenkrads aufgrund eines Lenkeingriffs und/oder einer Lenkreaktion des Lenkrads auf die Räder der vorderen Achse sowie eine Wirkung der Räder der vorderen Achse aufgrund eines Lenkeingriffs und/oder einer Lenkreaktion der Räder auf das Lenkrad zu übertragen.

In Ausgestaltung ist dem Fahrer des Fahrzeugs während des Betriebs für das Lenkrad unter und/oder durch Bereitstellung des manuellen Lenkradlenkmoments der Lenkradwinkel manuell einstellbar, wodurch für die Räder der vorderen Achse der Lenkwinkel manuell einstellbar ist. Das mindestens eine automatische aktive Lenkmodul ist dazu ausgebildet, für die Räder der mindestens einen Achse den mindestens einen automatischen Lenkwinkel einzustellen. Das Steuergerät ist dazu ausgebildet, das zu erwartende Lenkradlenkmoment als Effekt dieses mindestens einen automatisch eingestellten Lenkwinkels zu berechnen und aus diesem Effekt das zusätzlich automatisch einzustellende Lenkradlenkmoment zu ermitteln, das Lenkrad mit dem zusätzlich automatisch einzustellenden Lenkradlenkmoment zu beaufschlagen und somit den zusätzlichen Lenkradwinkel automatisch einzustellen.

Mit einer Ausführungsform des erfindungsgemäßen Lenksystems ist unter Durchführung einer Ausführungsform des erfindungsgemäßen Verfahrens möglich, einen Einfluss des mindestens einen aktiv automatisch angestellten Lenkwinkels als sekundärer Lenkeingriff des Fahrzeugs, bspw. eines Kraftfahrzeugs, auf die Lenksäule sowie das Lenkrad und somit einen Lenkstrang zu kompensieren, wodurch ein Lenkgefühl des Fahrers, der das Lenkrad manuell lenkt, aufgrund des mindestens einen aktiv automatisch eingestellten Lenkwinkels nicht beeinflusst wird.

Das mindestens eine automatische aktive Lenkmodul des automatischen aktiven Lenksystems ist als Überlagerungslenkung, Dynamiklenkung und/oder Hinterachslenkung ausgebildet. Mindestens ein aktives Lenkmodul ist als Lenkradlenkmomentaktuator dazu ausgebildet, die Lenksäule und somit das Lenkrad aufgrund des mindestens einen automatisch eingestellten Lenkwinkels zu beaufschlagen und somit zu beeinflussen sowie bspw. als elektromechanische Lenkung (EPS) ausgebildet. Somit sind der Lenkwinkel sowie das Lenkradlenkmoment mit diesem Lenkmodul einstellbar.

Mit dem Verfahren ist es möglich, dass sich mindestens ein automatischer Lenkeingriff, d. h. der mindestens eine Lenkwinkel, der durch das mindestens eine automatische aktive Lenkmodul als Aktuator automatisch eingestellt wird, auf das Lenkrad und somit das Lenkgefühl nicht negativ bemerkbar macht.

Im Rahmen des Verfahrens wird das zusätzlich automatisch einzustellende Lenkradlenkmoment ermittelt und zu einem Zeitpunkt eingestellt, zu dem der mindestens eine Lenkwinkel für die Räder automatisch eingestellt wird. Somit ist es möglich, den automatischen Lenkwinkel als ursprüngliche Ursache sowie das zusätzlich automatisch einzustellende Lenkradlenkmoment für das Lenkrad gleichzeitig einzustellen. Das zusätzlich automatisch einzustellende Lenkradlenkmoment hängt von dem zu erwartenden Lenkradlenkmoment ab, das wiederum von dem automatischen Lenkwinkel abhängig ist.

Somit ist es möglich, dass der tertiäre Lenkeingriff, bspw. das zusätzlich automatisch einzustellende Lenkradlenkmoment, und der sekundäre Lenkeingriff, bspw. der automatisch eingestellte Lenkwinkel, dessen Effekt mit dem zusätzlich automatisch einzustellenden Lenkradlenkmoment zu kompensieren ist, phasengleich sind. Somit wird vermieden, dass sich eine Auswirkung des Effekts des sekundären Lenkeingriffs, bspw. des automatischen Lenkwinkels phasenvoreilend oder phasennacheilend auf das Lenkrad auswirkt.

Mit dem Steuergerät wird eine Ansteuerungsfunktion für das aktive Lenksystem durchgeführt, wobei mit dem Steuergerät unter Berücksichtigung von der mindestens einen Betriebsgröße des Fahrzeugs der mindestens eine automatische Lenkwinkel ermittelt, bspw. berechnet wird. Zeitgleich wird mit dem zu berechnenden automatischen Lenkwinkel auch dessen Effekt, d. h. das zu erwartende Lenkradlenkmoment, berechnet. Zur Kompensation des Effekts werden das zusätzlich automatisch einzustellende Lenkradlenkmoment berechnet und unter Berücksichtigung dessen das als Lenkradlenkmomentaktuator ausgebildete automatische aktive Lenkmodul sowie weiterhin die Lenksäule und das Lenkrad eingestellt.

Somit ergibt sich u. a., dass die automatischen Lenkeingriffe des aktiven Lenksystems über die automatischen Lenkwinkel von dem Fahrer in seinem Lenkgefühl nicht mehr störend wahrgenommen werden.

Das automatische aktive Lenksystem ist bspw. als Integrallenkung ausgebildet und/oder zu bezeichnen. Unabhängig von einer konkreten Ausgestaltung des Lenksystems wird das zusätzlich automatisch einzustellende Lenkradlenkmoment, mit dem das Lenkrad ausgehend von dem als Lenkradlenkmomentaktuator ausgebildeten automatischen aktiven Lenkmodul über die Lenksäule beaufschlagt wird, zeitsynchron zur Ansteuerung der Räder zum Einstellen des mindestens einen automatischen Lenkwinkels eingestellt. Das zusätzlich automatisch einzustellende Lenkradlenkmoment zum Kompensieren des Effekts des zu erwartenden Lenkradlenkmoments aufgrund des mindestens einen automatisch einzustellenden Lenkwinkels wird anhand dieses mindestens einen in der Regel noch zu berechnenden automatischen Lenkwinkels und/oder einer zeitlichen Ableitung dieses automatischen Lenkwinkels eingestellt, wodurch zeitliche Verzögerungen zu vermeiden sind.

Mindestens ein automatisches aktives Lenkmodul, das der vorderen Achse und somit den Rädern der vorderen Achse zugeordnet ist, ist bspw. als Überlagerungslenkung ausgebildet und/oder zu bezeichnen. Das zusätzlich automatisch einzustellende Lenkradlenkmoment für den Lenkradlenkmomentaktuator wird in Ausgestaltung als Übertragungsfunktion des mindestens einen automatischen Lenkwinkels zu dem zu erwartenden Lenkradlenkmoment als Abstützungsmoment modelliert, wobei das zu erwartende Lenkradlenkmoment, das aus dem automatischen Lenkwinkel der Räder der vorderen Achse und/oder eines automatischen aktiven Lenkmoduls für die vordere Achse resultiert, gesteuert.

Zum Berechnen des zur Kompensation des Effekts vorgesehenen zusätzlich automatisch einzustellenden Lenkradlenkmoments wird ein Faktor auf den automatischen Lenkwinkel als vorgegebener bzw. vorzugebender Sollwinkel, ein Faktor auf die automatisch eingestellte Lenkwinkelgeschwindigkeit sowie ein Faktor auf die automatische Lenkwinkelbeschleunigung berücksichtigt. Weiterhin wird mindestens eine Abhängigkeit von mindestens einer Betriebsgröße des Fahrzeugs, d. h. der Geschwindigkeit, der Querbeschleunigung, dem manuellen Lenkradwinkel, der manuellen Lenkradwinkelgeschwindigkeit und einem manuellen Lenkradlenkmoment, das aus dem manuellen Lenkradwinkel resultiert, berücksichtigt.

Für die Räder der hinteren Achse ist vorgesehen, dass das mindestens eine automatische aktive Lenkmodul von dem Lenkrad und der Lenksäule getrennt ist und demnach keine direkte mechanische Verbindung zu dem Lenkrad aufweist. Dennoch ist es möglich, dass mit dem automatischen aktiven Lenkmodul für die hintere Achse ein Lenkwinkel der hinteren Räder automatisch eingestellt wird, wobei für die Räder der hinteren und der vorderen Achse unterschiedliche Lenkwinkel sowie daraus resultierende unterschiedliche Lenkradlenkmomente entstehen. Dies ist bspw. dann der Fall, wenn auf die Achsen des Fahrzeugs unterschiedliche Seitenkräfte wirken. Ein Unterschied der Seitenkräfte auf die beiden Achsen wird anhand des Einspurmodells in Abhängigkeit der Geschwindigkeit, des Lenkradwinkels, der Lenkradwinkelgeschwindigkeit, der Gierrate und/oder der Querbeschleunigung bspw. geschätzt und somit ermittelt. Auch in diesem Fall wird das zusätzlich automatisch einzustellende Lenkradlenkmoment zum Kompensieren des Effekts des mindestens einen automatisch eingestellten Lenkwinkels verwendet, wobei ein Faktor auf den automatisch eingestellten Lenkwinkel als Sollwinkel, ein Faktor auf die automatische Lenkwinkelgeschwindigkeit sowie ein Faktor auf die automatische Lenkwinkelbeschleunigung berücksichtigt werden.

Ergänzend ist es möglich, in einer kritischen Fahrsituation, bspw. bei einem Übersteuern oder Untersteuern des Fahrzeugs, unter Berücksichtigung der mindestens einen Betriebsgröße in Abhängigkeit eines von dem Fahrer gewählten Fahrprofils einen Wert des automatisch einzustellenden Lenkradlenkmoments zu verstärken.

Weitere Vorteile und Ausgestaltungen der Erfindung ergeben sich aus der Beschreibung und der beiliegenden Zeichnung.

Die Erfindung ist anhand von Ausführungsformen in der Zeichnung schematisch dargestellt und wird unter Bezugnahme auf die Zeichnung schematisch und ausführlich beschrieben.

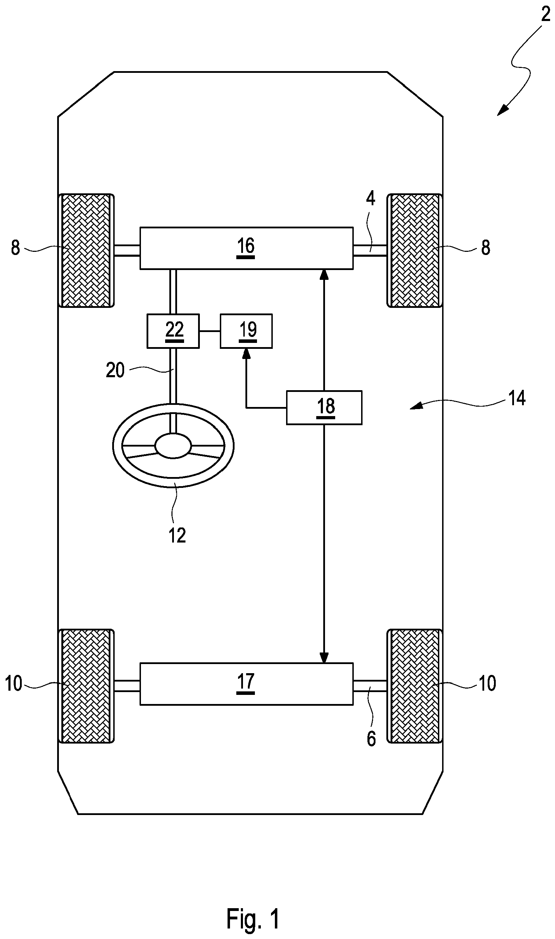

Figur 1 zeigt in schematischer Darstellung eine Ausführungsform eines erfindungsgemäßen Lenksystems bei Durchführung einer Ausführungsform des erfindungsgemäßen Verfahrens.

Figur 1 zeigt in schematischer Darstellung ein Fahrzeug 2 mit einer vorderen Achse 4 und einer hinteren Achse 6, wobei an der vorderen Achse 4 vordere Räder 8 und an der hinteren Achse 6 hintere Räder 10 angeordnet sind. Das Fahrzeug 2 umfasst zum manuellen Lenken bzw. Steuern der Räder 8, 10 mindestens einer der beiden Achsen 4, 6, in der Regel zumindest zum manuellen Lenken der Räder 8 der vorderen Achse 4 ein von einem Fahrer des Fahrzeugs 2 bedienbares, bspw. drehbares, Lenkrad 12, für das der Fahrer während einer Fahrt des Fahrzeugs 2 einen jeweils vorgesehenen bzw. gewünschten Lenkradwinkel manuell einstellt, von dem ein manuell eingestellter Lenkwinkel der Räder 8, 10 abhängig ist. Eine Änderung dieses manuell eingestellten Lenkradwinkels entspricht einer Lenkradwinkelgeschwindigkeit, wobei der Lenkwinkel der Räder 8, 10 aus dem Lenkradwinkel des Lenkrads 12 und eine Lenkwinkelgeschwindigkeit der Räder 8, 10 aus der Lenkradwinkelgeschwindigkeit für das Lenkrad 12 resultiert, wobei die Lenkwinkelgeschwindigkeit der Räder 8, 10 einer zeitlichen Änderung des Lenkwinkels für die Räder 8, 10 entspricht.

Dieses Lenkrad 12 ist als Teil der Ausführungsform des erfindungsgemäßen aktiven Lenksystems 14 ausgebildet, das weiterhin zwei automatische aktive Lenkmodule 16, 17 als Lenkmomentschnittstellen, ein Steuergerät 18 und einen als Elektromotor ausgebildeten Lenkradlenkmomentaktuator als drittes automatisches aktives Lenkmodul 19 aufweist, das dazu ausgebildet ist, eine Lenksäule 20 zu beaufschlagen, die einerseits mit dem Lenkrad 12 und andererseits über das erste automatische aktive Lenkmodul 16 mit der vorderen Achse 4 und den vorderen Rädern 8 verbunden ist. Jedes automatische aktive Lenkmodul 16, 17, 19 ist dazu ausgebildet, einen Winkel, bspw. einen Lenkwinkel eines Rads 8, 10 oder einen Lenkradlenkwinkel des Lenkrads 12, sowie ein Moment, bspw. ein Lenkradlenkmoment des Lenkrads 12 oder ein Lenkmoment eines Rads 8, 10, einzustellen. Dabei ist das dritte automatische aktive Lenkmodul 19 dazu ausgebildet, auch den Lenkwinkel und das Lenkmoment der vorderen Räder 8 über das erste automatische aktive Lenkmodul 16 einzustellen.

Dabei ist das erste Lenkmodul 16 als automatisch elektromechanisches Lenkmodul der vorderen Achse 4 und den vorderen Rädern 8 zugeordnet sowie dazu ausgebildet, die vorderen Räder 8 zu beaufschlagen und zu lenken. Das zweite Lenkmodul 17 ist hier als Hinterradlenkung der hinteren Achse 6 und den hinteren Rädern 10 zugeordnet sowie dazu ausgebildet, die hinteren Räder 10 automatisch zu beaufschlagen und zu lenken.

Das Lenkrad 12 ist mit der Lenksäule 20 verbunden, die ein Getriebe 22 aufweist. Mit dem Getriebe 22 wird ein Lenkwunsch und somit ein primärer Lenkeingriff eines Fahrers des Fahrzeugs 2, der von dem Fahrer über einen Lenkradwinkel und/oder ein Lenkradlenkmoment manuell eingestellt wird, erfasst. Außerdem wird von dem Getriebe 22 ausgehend von dem erfassten primären Lenkeingriff das erste Lenkmodul 16 über mindestens ein Signal angesteuert und für die vorderen Räder 8 als primäre Lenkreaktion ein manueller Lenkwinkel, der von dem Lenkradwinkel abhängig ist, eingestellt, wobei eine zeitliche Änderung des manuellen Lenkwinkels einer manuellen Lenkwinkelgeschwindigkeit entspricht.

Das Steuergerät 18 ist dazu ausgebildet, die Ausführungsform des erfindungsgemäßen Verfahrens zu kontrollieren und somit zu steuern und/oder zu regeln. Außerdem wird von dem Steuergerät 18 als mindestens eine Betriebsgröße eines Fahrzeugs 2 unter Berücksichtigung mindestens eines Betriebsparameters des Fahrzeugs 2, bspw. einer Gierrate bzw. eines Gierwinkels des Fahrzeugs 2, des manuell eingestellten Lenkwinkels, einer manuell eingestellten Lenkwinkelgeschwindigkeit, einer Geschwindigkeit des Fahrzeugs 2 und/oder einer Querbeschleunigung des Fahrzeugs 2, mindestens ein Signal erzeugt, mit dem das erste Lenkmodul 16 und/oder das Lenkmodul 17 angesteuert wird. Ausgehend von dem mindestens einen Signal des Steuergeräts 18 wird von dem ersten Lenkmodul 16 für die vorderen Räder 8 als primäre Lenkreaktion ein vorderer automatischer Lenkwinkel sowie ggf. auch eine vordere automatische Lenkwinkelgeschwindigkeit und/oder eine vordere automatische Lenkwinkelbeschleunigung eingestellt. Weiterhin wird ausgehend von dem mindestens einen Signal des Steuergeräts 18 von dem zweiten Lenkmodul 17 für die hinteren Räder 10 als primäre Lenkreaktion ein hinterer automatischer Lenkwinkel sowie ggf. auch eine hintere automatische Lenkwinkelgeschwindigkeit und/oder eine hintere automatische Lenkwinkelbeschleunigung eingestellt.

Das Steuergerät 18 ist auch dazu ausgebildet, mindestens ein Signal, das von dem mindestens einen Betriebsparameter abhängig ist, zu erzeugen und damit das dritte aktive Lenkmodul 19 für das Lenkrad 12 anzusteuern, das wiederum dazu ausgebildet ist, für die Lenksäule 20 und somit für das Lenkrad 12 als tertiärer Lenkeingriff einen automatischen Lenkradwinkel einzustellen und einem manuell eingestellten Lenkradwinkel zu überlagern, wobei auch ein Lenkradlenkmoment beeinflusst wird. Hierdurch ist es u. a. möglich, dem Fahrer eine fühlbare bzw. spürbare Rückmeldung über ein Verhalten der Räder 8, 10 zu vermitteln. Dabei ist über das dritte aktive Lenkmodul 19 eine Überlagerungslenkung bereitstellbar.

Bei der Ausführungsform des Verfahrens wird von dem Fahrer des Fahrzeugs 2 für das Lenkrad 12 durch Drehen des Lenkrads 12 als primärer Lenkeingriff ein manuelles Lenkradlenkmoment bereitgestellt und ein Lenkradwinkel manuell eingestellt, wodurch für die Räder 8 der vorderen Achse 4 als primäre Lenkreaktion ein Lenkwinkel manuell eingestellt wird. Außerdem wird mit mindestens einem der automatischen aktiven Lenkmodule 16, 17, 19 für die Räder 8, 10 mindestens einer Achse 4, 6 mindestens als sekundärer Lenkeingriff ein automatischer Lenkwinkel und/oder für das Lenkrad 12 der Lenkradwinkel eingestellt. Mit dem Steuergerät 18 wird ein zu erwartendes Lenkradlenkmoment als Effekt bzw. sekundäre Lenkreaktion, hier als mechanische Auswirkung dieses mindestens einen automatisch eingestellten Lenkwinkels auf das Lenkrad 12 berechnet. Aus diesem Effekt wird ein zusätzlich automatisch einzustellendes Lenkradlenkmoment als tertiärer Lenkeingriff ermittelt, mit dem das Lenkrad 12 beaufschlagt wird, wobei ergänzend zu dem manuell eingestellten Lenkradwinkel ein zusätzlicher Lenkradwinkel automatisch eingestellt wird.

## Patentansprüche

1. Verfahren zum Lenken eines Fahrzeugs (2), das eine vordere Achse (4) mit lenkbaren Rädern (8) und eine hintere Achse (6) mit lenkbaren Rädern (10) aufweist, mit einem Lenksystem (14), das als Komponenten ein von einem Fahrer bedienbares Lenkrad (12) und mindestens ein automatisches Lenkmodul (16, 17, 19) aufweist, wobei von dem Fahrer des Fahrzeugs (2) für das Lenkrad (12) ein manueller primärer Lenkeingriff vorgenommen wird, aufgrund dessen sich für die Räder (8) der vorderen Achse (4) eine manuelle primäre Lenkreaktion ergibt, wobei aufgrund der manuellen primären Lenkreaktion mit dem mindestens einen automatischen Lenkmodul (16, 17, 19) für die Räder (8, 10) mindestens einer Achse (4, 6) mindestens ein automatischer sekundärer Lenkeingriff vorgenommen wird, wobei eine zu erwartende sekundäre Lenkreaktion des Lenkrads (12) als Effekt auf diesen mindestens einen automatischen sekundären Lenkeingriff berechnet wird, wobei aus dieser zu erwartenden sekundären Lenkreaktion ein zusätzlicher automatisch einzustellender tertiärer Lenkeingriff ermittelt wird, der von dem mindestens einen automatischen Lenkmodul (16, 17, 19) für das Lenkrad (12) vorgenommen wird, **dadurch gekennzeichnet, dass** die sekundäre Lenkreaktion berechnet wird, bevor der sekundäre Lenkeingriff vorgenommen wird, und dass mit dem zusätzlichen automatisch einzustellenden tertiären Lenkeingriff der Effekt des mindestens einen automatischen sekundären Lenkeingriffs kompensiert wird.

2. Verfahren nach Anspruch 1, bei dem durch Vornehmen mindestens eines Lenkeingriffs für mindestens eine der Komponenten des Lenksystems (14) ein Winkel und/oder ein Moment eingestellt wird, wobei für mindestens eine weitere Komponente des Lenksystems (14) ein Winkel und/oder ein Moment eingestellt wird, der bzw. das sich als Lenkreaktion ergibt.

3. Verfahren nach Anspruch 1 oder 2, bei von dem Fahrer des Fahrzeugs (2) für das Lenkrad (12) der manuelle primäre Lenkeingriff vorgenommen wird, wobei für das Lenkrad ein primärer manueller Lenkradwinkel als Winkel und/oder ein primäres manuelles Lenkradlenkmoment als Moment eingestellt wird bzw. werden, aufgrund dessen sich für die Räder (8) der vorderen Achse (4) die manuelle primäre Lenkreaktion ergibt, wobei für die Räder (8, 10) ein primärer manueller Lenkwinkel als Winkel und/oder ein primäres manuelles Lenkmoment als Moment eingestellt wird, wobei aufgrund der manuellen primären Lenkreaktion mit dem mindestens einen automatischen Lenkmodul (16, 17, 19) für die Räder (8, 10) mindestens einer Achse (4, 6) der mindestens eine automatische sekundäre Lenkeingriff vorgenommen wird, wobei ein sekundärer automatischer Lenkwinkel als Winkel und/oder ein sekundäres automatisches Lenkmoment als Moment eingestellt wird, wobei als zu erwartende sekundäre Lenkreaktion des Lenkrads (12) ein sekundärer Lenkradwinkel als Winkel und/oder ein sekundäres Lenkradlenkmoment als Moment berechnet wird, wobei aus dieser zu erwartenden sekundären Lenkreaktion als der zusätzlich automatisch einzustellende tertiäre Lenkeingriff ein tertiärer Lenkradwinkel als Winkel und/oder ein tertiäres Lenkradlenkmoment als Moment ermittelt wird, der und/oder das von dem mindestens einen automatischen Lenkmodul (16, 17, 19) für das Lenkrad (12) eingestellt wird bzw. werden.

4. Verfahren nach Anspruch 3, bei dem von dem Fahrer für das Lenkrad (12) unter Bereitstellung des manuellen primären Lenkradlenkmoments der primäre Lenkradwinkel manuell eingestellt wird, wodurch für die Räder (8) der vorderen Achse (4) der primäre Lenkwinkel manuell eingestellt wird, wobei mit dem mindestens einen automatischen Lenkmodul (16, 17, 19) für die Räder (8, 10) der mindestens einen Achse (4, 6) der mindestens eine automatische sekundäre Lenkwinkel eingestellt wird, wobei ein zu erwartendes Lenkradlenkmoment als Effekt dieses mindestens einen automatisch eingestellten Lenkwinkels berechnet wird, wobei aus diesem Effekt das zusätzliche automatisch einzustellende tertiäre Lenkradlenkmoment ermittelt wird, mit dem das Lenkrad (12) von dem mindestens einen automatische Lenkmodul (16, 17, 19) beaufschlagt und für das Lenkrad (12) der zusätzliche Lenkradwinkel automatisch eingestellt wird.

5. Verfahren nach einem der voranstehenden Ansprüche, bei dem der zusätzlich automatisch einzustellende tertiäre Lenkeingriff in Abhängigkeit des mindestens einen automatisch eingestellten sekundären Lenkeingriffs und/oder in Abhängigkeit mindestens einer zeitlichen Ableitung des automatisch eingestellten sekundären Lenkeingriffs ermittelt wird.

6. Verfahren nach einem der voranstehenden Ansprüche, bei dem für das mindestens eine Rad (8, 10) der sekundäre Lenkeingriff und zeitgleich für das Lenkrad (12) der zusätzlich automatisch einzustellende tertiäre Lenkeingriff vorgenommen wird.

7. Verfahren nach einem der voranstehenden Ansprüche, bei dem der mindestens eine automatisch eingestellte sekundäre Lenkeingriff, die zu erwartende sekundäre Lenkreaktion als Effekt des mindestens einen automatisch eingestellten sekundären Lenkeingriffs und/oder der zusätzlich automatisch einzustellende tertiäre Lenkeingriff abhängig von mindestens einer Betriebsgröße des Fahrzeugs ermittelt wird bzw. werden.

8. Lenksystem zum Lenken eines Fahrzeugs (2), das eine vordere Achse (4) mit lenkbaren Rädern (8) und eine hintere Achse (6) mit lenkbaren Rädern (10) aufweist, wobei das Lenksystem (14) als Komponenten ein von einem Fahrer bedienbares Lenkrad (12), ein Steuergerät (18) und mindestens ein automatisches Lenkmodul (16, 17, 19) aufweist, wobei von dem Fahrer des Fahrzeugs (2) für das Lenkrad (12) ein manueller primärer Lenkeingriff vorzunehmen ist, aufgrund dessen sich für die Räder (8) der vorderen Achse (4) eine manuelle primäre Lenkreaktion ergibt, wobei das mindestens eine automatische Lenkmodul (16, 17, 19) aufgrund der manuellen primären Lenkreaktion dazu ausgebildet ist, für die Räder (8, 10) mindestens einer Achse (4, 6) mindestens einen automatischen sekundären Lenkeingriff vorzunehmen, wobei das Steuergerät (18) dazu ausgebildet ist, eine zu erwartende sekundäre Lenkreaktion des Lenkrads (12) als Effekt auf diesen mindestens einen automatischen sekundären Lenkeingriff zu berechnen, aus dieser zu erwartenden sekundären Lenkreaktion einen zusätzlichen automatisch einzustellenden tertiären Lenkeingriff zu ermitteln und zu veranlassen, dass das mindestens eine automatische Lenkmodul (16, 17, 19) für das Lenkrad (12) den tertiären Lenkeingriff vornimmt, **dadurch gekennzeichnet, dass** die sekundäre Lenkreaktion berechnet wird, bevor der sekundäre Lenkeingriff vorgenommen wird, und dass mit dem zusätzlichen automatisch einzustellenden tertiären Lenkeingriff der Effekt des mindestens einen automatischen sekundären Lenkeingriffs kompensiert wird.

9. Lenksystem nach Anspruch , bei dem mindestens ein Lenkmodul (16, 17, 19), das auf das Lenkrad (12) und die Räder (8) der vorderen Achse (4) wirkt, dazu ausgebildet ist, für das Lenkrad (12) den zusätzlich automatisch einzustellenden tertiären Lenkeingriff vorzunehmen.

## Claims

1. Method for steering a vehicle (2), which has a front axle (4) with steerable wheels (8) and a rear axle (6) with steerable wheels (10), with a steering system (14), which has, as components, a steering wheel (12) operable by a driver and at least one automatic steering module (16, 17, 19), wherein a manual primary steering action for the steering wheel (12) is performed by the driver of the vehicle (2), on the basis of which a manual primary steering reaction is produced for the wheels (8) of the front axle (4), wherein on the basis of the manual primary steering reaction, at least one automatic secondary steering action is performed by the at least one automatic steering module (16, 17, 19) for the wheels (8, 10) of at least one axle (4, 6), wherein a secondary steering reaction of the steering wheel (12) that is to be expected is calculated as an effect on this at least one automatic secondary steering action, wherein, from this secondary steering reaction that is to be expected, an additional tertiary steering action that is to be established automatically is determined, which action is performed by the at least one automatic steering module (16, 17, 19) for the steering wheel (12), **characterised in that** the secondary steering reaction is calculated before the secondary steering action is performed and that the effect of the at least one automatic secondary steering action is compensated for by the additional tertiary steering action that is to be established automatically.

2. Method according to claim 1, in which, by performing at least one steering action, an angle and/or a torque is established for at least one of the components of the steering system (14), wherein an angle and/or a torque is established for at least one further component of the steering system (14), which results in a steering reaction.

3. Method according to claim 1 or 2, in which the manual primary steering action for the steering wheel (12) is performed by the driver of the vehicle (2), wherein a primary manual steering wheel angle is established as the angle and/or a primary manual steering wheel steering torque is established as the torque for the steering wheel, on the basis of which the manual primary steering reaction is produced for the wheels (8) of the front axle (4), wherein a primary manual steering angle is established as the angle and/or a primary manual steering torque is established as the torque for the wheels (8, 10), wherein, on the basis of the manual primary steering reaction, the at least one automatic secondary steering action is performed with the at least one automatic steering module (16, 17, 19) for the wheels (8, 10) of at least one axle (4, 6), wherein a secondary automatic steering angle is established as the angle and/or a secondary automatic steering torque is established as the torque, wherein, as the secondary steering reaction of the steering wheel (12) that is to be expected, a secondary steering wheel angle is calculated as the angle and/or a secondary steering wheel steering torque is calculated as the torque, wherein, from this secondary steering reaction that is to be expected, as the additional tertiary steering action that is to be established automatically, a tertiary steering wheel angle is determined as the angle and/or a tertiary steering wheel steering torque is determined as the torque, which is/are established by the at least one automatic steering module (16, 17, 19) for the steering wheel (12).

4. Method according to claim 3, in which the primary steering wheel angle is manually established by the driver for the steering wheel (12) with the provision of the manual primary steering wheel steering torque, whereby the primary steering angle for the wheels (8) of the front axle (4) is manually established, wherein the at least one automatic secondary steering angle is established with the at least one automatic steering module (16, 17, 19) for the wheels (8, 10) of the at least one axle (4, 6), wherein a steering wheel steering torque that is to be expected is calculated as an effect of this at least one automatically established steering angle wherein, from this effect, the additional tertiary steering wheel steering torque that is to be established automatically is determined, to which the steering wheel (12) is subjected by the at least one automatic steering module (16, 17, 19) and with which the additional steering wheel angle for the steering wheel (12) is automatically established.

5. Method according to any of the preceding claims, in which the additional tertiary steering action that is to be established automatically is determined as a function of the at least one automatically established secondary steering action and/or as a function of at least one time derivative of the automatically established secondary steering action.

6. Method according to any of the preceding claims, in which the secondary steering action for the at least one wheel (8, 10) and the additional tertiary steering action that is to be established automatically for the steering wheel (12) are performed simultaneously.

7. Method according to any of the preceding claims, in which the at least one automatically established secondary steering action, the secondary steering reaction that is to be expected as an effect of the at least one automatically established secondary steering action and/or the additional tertiary steering action that is to be established automatically is/are determined as a function of at least one operating variable of the vehicle.

8. Steering system for steering a vehicle (2), which has a front axle (4) with steerable wheels (8) and a rear axle (6) with steerable wheels (10), wherein the steering system (14) has, as components, a steering wheel (12) operable by a driver, a control device (18) and at least one automatic steering module (16, 17, 19), wherein a manual primary steering action for the steering wheel (12) must be performed by the driver of the vehicle (2), on the basis of which a manual primary steering reaction is produced for the wheels (8) of the front axle (4), wherein the at least one automatic steering module (16, 17, 19) is designed, on the basis of the manual primary steering reaction, to perform at least one automatic secondary steering action for the wheels (8, 10) of at least one axle (4, 6), wherein the control device (18) is designed to calculate a secondary steering reaction of the steering wheel (12) that is to be expected as an effect on this at least one automatic secondary steering action, to determine an additional tertiary steering action that is to be established automatically from this secondary steering reaction that is to be expected and to ensure that the at least one automatic steering module (16, 17, 19) performs the tertiary steering action for the steering wheel (12), **characterised in that** the secondary steering reaction is calculated before the secondary steering action is performed, and that the effect of the at least one automatic secondary steering action is compensated for by the additional tertiary steering action that is to be established automatically.

9. Steering system according to claim , in which at least one steering module (16, 17, 19), which acts on the steering wheel (12) and the wheels (8) of the front axle (4), is designed to perform the additional tertiary steering action that is to be established automatically for the steering wheel (12).

## Revendications

1. Procédé pour diriger un véhicule (2) qui présente un essieu avant (4) avec des roues dirigeables (8) et un essieu arrière (6) avec des roues dirigeables (10), avec un système de direction (14) qui présente en tant que composants un volant actionnable par un conducteur (12) et au moins un module de direction automatique (16, 17, 19), dans lequel une intervention de direction primaire manuelle est entreprise par le conducteur du véhicule (2) pour le volant (12), intervention sur la base de laquelle une réaction de direction primaire manuelle est produite pour les roues (8) de l'essieu avant (4), dans lequel en raison de la réaction de direction primaire manuelle avec l'au moins un module de direction automatique (16, 17, 19) pour les roues (8, 10) d'au moins un essieu (4, 6) au moins une intervention de direction secondaire automatique est entreprise, dans lequel une réaction de direction secondaire à attendre du volant (12) comme effet sur cette au moins une intervention de direction secondaire automatique est calculée, dans lequel à partir de cette réaction de direction secondaire à attendre une intervention de direction tertiaire supplémentaire à régler automatiquement est déterminée, qui est entreprise par l'au moins un module de direction automatique (16, 17, 19) pour le volant (12), **caractérisé en ce que** la réaction de direction secondaire est calculée avant que l'intervention de direction secondaire soit entreprise, et **en ce que**, avec l'intervention de direction tertiaire supplémentaire à régler automatiquement, l'effet de l'au moins une intervention de direction secondaire automatique est compensé.

2. Procédé selon la revendication 1, dans lequel par l'entreprise d'au moins une intervention de direction pour au moins un des composants du système de direction (14) un angle et/ou un couple sont réglés, dans lequel pour au moins un autre composant du système de direction (14) un angle et/ou un couple sont réglés, qui se produisent en tant que réaction de direction.

3. Procédé selon la revendication 1 ou 2, dans lequel l'intervention de direction primaire manuelle est entreprise par le conducteur du véhicule (2) pour le volant (12), dans lequel pour le volant un angle de volant manuel primaire est réglé en tant qu'angle et/ou un couple de direction de volant manuel primaire sont réglés en tant que couple, en raison duquel la réaction de direction primaire manuelle se produit pour les roues (8) de l'essieu avant (4), dans lequel pour les roues (8, 10) un angle de direction manuel primaire est réglé en tant qu'angle et/ou un couple de direction manuel primaire est réglé en tant que couple, dans lequel en raison de la réaction de direction primaire manuelle avec l'au moins un module de direction automatique (16, 17, 19) pour les roues (8, 10) d'au moins un essieu (4, 6) l'au moins une intervention de direction secondaire automatique est entreprise, dans lequel un angle de direction automatique secondaire est réglé en tant qu'angle et/ou un couple de direction automatique secondaire est réglé en tant que couple, dans lequel en tant que réaction de direction secondaire à attendre du volant (12) un angle de volant secondaire est calculé en tant qu'angle et/ou un couple de direction de volant secondaire est calculé en tant que couple, dans lequel à partir de cette réaction de direction secondaire à attendre en tant qu'intervention de direction tertiaire supplémentaire à régler automatiquement un angle de volant tertiaire est déterminé en tant qu'angle et/ou un couple de direction de volant tertiaire est déterminé en tant que couple, qui est ou sont réglés par l'au moins un module de direction automatique (16, 17, 19) pour le volant (12).

4. Procédé selon la revendication 3, dans lequel l'angle de direction primaire est réglé manuellement par le conducteur pour le volant (12) en prenant en compte le couple de direction de volant primaire manuel de l'angle de volant primaire, moyennant quoi pour les roues (8) de l'essieu avant (4) l'angle de direction primaire est réglé manuellement, dans lequel avec l'au moins un module de direction automatique (16, 17, 19) pour les roues (8, 10) de l'au moins un essieu (4, 6) l'au moins un angle de direction secondaire automatique est réglé, dans lequel un couple de direction de volant à attendre est calculé comme effet de cet au mois un angle de direction réglé automatiquement, dans lequel à partir de cet effet le couple de direction de volant tertiaire à régler automatiquement supplémentaire est déterminé, avec lequel le volant (12) est sollicité par l'au moins un module de direction automatique (16, 17, 19) et l'angle de volant supplémentaire réglé pour le volant (12).

5. Procédé selon l'une quelconque des revendications précédentes, dans lequel l'intervention de direction tertiaire supplémentaire à régler automatiquement est déterminée en fonction de l'au moins une intervention de direction secondaire réglée automatiquement et/ou en fonction d'au moins une dérivation temporelle de l'intervention de direction secondaire réglée automatiquement.

6. Procédé selon l'une quelconque des revendications précédentes, dans lequel pour l'au moins une roue (8, 10) l'intervention de direction secondaire et en même temps pour le volant (12) l'intervention de direction tertiaire supplémentaire à régler automatiquement sont entreprises.

7. Procédé selon l'une quelconque des revendications précédentes, dans lequel l'au moins une intervention de direction secondaire réglée automatiquement, la réaction de direction secondaire à attendre comme effet de l'au moins une intervention de direction secondaire réglée automatiquement et/ou l'au moins une intervention de direction tertiaire supplémentaire à régler automatiquement est ou sont déterminées en fonction d'au moins une grandeur de fonctionnement du véhicule.

8. Système de direction pour diriger un véhicule (2), qui présente un essieu avant (4) avec des roues dirigeables (8) et un essieu arrière (6) avec des roues dirigeables (10), dans lequel le système de direction (14) présente en tant que composants un volant actionnable par un conducteur (12), un appareil de commande (18) et au moins un module de direction automatique (16, 17, 19), dans lequel une intervention de direction primaire manuelle est à entreprendre par le conducteur du véhicule (2) pour le volant (12), en raison de laquelle une réaction de direction primaire manuelle se produit pour les roues (8) de l'essieu avant (4), dans lequel l'au moins un module de direction automatique (16, 17, 19) est configuré en raison de la réaction de direction primaire manuelle pour entreprendre au moins une intervention de direction secondaire automatique pour les roues (8, 10) d'au moins un essieu (4, 6), dans lequel l'appareil de commande (18) est configuré pour calculer une réaction de direction secondaire à attendre du volant (12) comme effet sur cette au moins une intervention de direction secondaire automatique, pour déterminer et provoquer à partir de cette réaction de direction secondaire à attendre une intervention de direction tertiaire supplémentaire à régler automatiquement, en ce que l'au moins un module de direction automatique (16, 17, 19) entreprend l'intervention de direction tertiaire pour le volant (12), **caractérisé en ce que** la réaction de direction secondaire est calculée avant que l'intervention de direction secondaire soit entreprise, et **en ce que**, avec l'intervention de direction tertiaire supplémentaire à régler automatiquement, l'effet de l'au moins une intervention de direction secondaire automatique est compensé.

9. Système de direction selon la revendication, dans lequel au moins un module de direction (16, 17, 19) qui agit sur le volant (12) et les roues (8) de l'essieu avant (4) est configuré pour entreprendre l'intervention de direction tertiaire supplémentaire à régler automatiquement pour le volant (12).
